# EUROPÄISCHE PATENTSCHRIFT

(11) **EP 2 123 907 B1**
(45) Veröffentlichungstag und Bekanntmachung des Hinweises auf die Patenterteilung: **29.03.2017**
(21) Anmeldenummer: 09006677.0
(22) Anmeldetag: 18.05.2009
(51) Int. Cl.: F03D 9/00

(54) **Signaleinrichtung für Offshore-Windpark**
Signal device for offshore wind park
Dispositif de signal pour éolienne offshore

(30) Priorität: 20.05.2008 DE 102008024380
(43) Veröffentlichungstag der Anmeldung: 25.11.2009
(73) Patentinhaber: Senvion GmbH, 22297 Hamburg (DE)
(72) Erfinder: Carstensen, Lorenz-Heinrich, 25855 Haselund (DE); Altemark, Jens, 24768 Rendsburg (DE)
(74) Vertreter: Glawe, Delfs, Moll

(56) Entgegenhaltungen:
- WO-A1-2007/093570
- WO-A2-2004/012182
- DE-A1- 10 231 299

## Beschreibung

Die Erfindung betrifft einen Offshore-Windpark bestehend aus mehreren Windenergieanlagen zur Erzeugung von elektrischem Strom aus Wind, wobei mehr als eine Windenergieanlage jeweils ein akustisches Warngerät umfasst, sowie ein Verfahren zur Steuerung der akustischen Warngeräte.

Ein Kollisionswarnsystem für Windenergieanlagen ist beispielsweise aus der DE 102 31 299 A1 bekannt.

Ein Offshore-Windpark ist ein räumlich zusammenhängendes Areal in dem Windenergieanlagen im Meer aufgestellt werden. Sie befinden sich häufig in der Nähe von Schifffahrtsstraßen und sind vom allgemeinen Schiffverkehr erreichbar. Dabei unterliegen die Schiffe durch Fehlnavigation einer Kollisionsgefahr mit den Offshore-Windparks. Diesem Risiko wird dadurch Rechnung getragen, dass einzelne Windenergieanlagen mit Positionslichtern, Radarreflektoren und Funkbaken ausgestattet werden. Um den Schiffen in der Nähe des Offshore-Windparks auch bei schlechter Sicht Warnhinweise geben zu können, kann auch ein Nebelhorn im Windpark gefordert werden (siehe IALA Recommendation O-117 "On the Marking of Offshore Wind Farms").

Dabei sind Offshore-Windparks aber teilweise räumlich stark ausgedehnt, so dass ein einzelnes Nebelhorn den Verkehrsteilnehmern auf See bei schlechter Sicht nur eingeschränkte Orientierungshilfe gibt und die zu vermeidenden Bereiche und Bewegungsrichtungen vom Seefahrer schlecht zu bestimmen sind.

Die Aufgabe der Erfindung ist es die akustische Gefahrenkennzeichnung eines Offshore-Windparks zu verbessern.

Die erfindungsgemäße Lösung liegt in einer Vorrichtung und in einem Verfahren gemäß den Merkmalen der unabhängigen Ansprüche, vorteilhafte Weiterbildungen sind Gegenstand der abhängigen Ansprüche.

Erfindungsgemäß ist bei einem Offshore-Windpark umfassend mindestens zwei Windenergieanlagen zur Erzeugung von elektrischem Strom aus Wind, mindestens zwei akustischen Warngeräten und einer Sichtweitenmesseinrichtung zum Erfassen der Sichtweite vorgesehen, dass nach Erfassen einer Sichtweite unterhalb eines Sichtweitengrenzwerts durch die Sichtweitenmesseinrichtung ein Aktivierungssignal an die mindestens zwei akustischen Warngeräte angelegt wird, und weiter mindestens ein Synchronisierungsmodul vorgesehen ist, das die Zeitpunkte von mindestens einem der mindestens zwei akustischen Warngeräte abzugebenden akustischen Signale in Relation zu den akustischen Signalen mindestens eines weiteren akustischen Warngeräts bestimmt.

Die Erfindung hat erkannt, dass zur besseren Orientierung der Schiffe anhand akustischer Warnsignale die Abgabe der Signale synchronisiert geschehen sollte. Zum einen erleichtert dieses die Navigation entlang eines Offshore-Windparks und ermöglicht ein sicheres Umschiffen, zum anderen wird den Schiffen durch die synchronisierte Abgabe des Warnsignals der Eindruck eines zusammenhängenden Gebiets vermittelt.

Die Erfindung setzt an dem Punkt an, dass bei unkoordinierter Signalabgabe im Windpark, insbesondere bei größeren Windparks mit größeren Entfernungen zwischen den Windenergieanlagen, leicht der Eindruck vollständig getrennter Einheiten entstehen kann, zwischen denen noch ausreichend Platz zum Navigieren eines Schiffs verbleibt. Da meist nur die Windenergieanlagen eines Offshore-Windparks mit Warngeräten ausgestattet sind, die sich am Rande des Parks befinden, kann sich das Schiff dadurch in den Windpark hineinmanövrieren und hat dadurch eine besonders hohe Kollisionsgefahr mit den Windenergieanlagen.

Eine synchronisierte Abgabe der Warnsignale signalisiert eine klare Zusammengehörigkeit der abgebenden Windenergieanlagen, so dass das navigierende Schiff erkennen kann, dass der zwischen den Signalquellen befindliche Bereich ebenfalls im Gefahrenbereich liegt. Dabei ist unter synchronisierter Abgabe jede geordnete Reihenfolge von Signalen zu verstehen, bei der die Abgabe der Signale entweder gleichzeitig geschieht oder derart, dass sich die Signale zeitlich voneinander unterscheiden lassen. Um einige Beispiele zu nennen: Es wird unter synchronisierter Abgabe eine zeitgleiche Signalabgabe oder eine gezielt sequentielle Abgabe verstanden. Genauso werden unter synchronisierter Signalabgabe aber auch Mischformen verstanden, bei denen Gruppen gebildet werden, die zeitgleich Signale abgeben, wobei die Gruppen zueinander Signale gezielt sequentiell abgeben.

In einer Weiterbildung umfassen die akustischen Warngeräte jeweils ein Signalmodul, in dem die Art, Reihenfolge und/oder Tonhöhe des akustischen Signals hinterlegt ist, wobei sich die Signale bevorzugt voneinander unterscheiden. Dieses kann beispielsweise die Tonhöhe sein, so dass auch bei zeitgleichem Hören der Signale deutlich wird, dass es sich um mehr als ein akustisches Signal handelt.

In einer weiteren Weiterbildung der Erfindung ist vorgesehen, dass die mindestens zwei akustischen Warngeräte jeweils ein Lautstärkemodul umfassen, mittels dessen die Lautstärke der akustischen Signale einstellbar ist. Dadurch wird die Lautstärke des abgegebenen Signals von außen einstellbar und kann situationsabhängig eingestellt werden, beispielsweise durch die Steuerung des Windparks oder der Windenergieanlage.

Bevorzugt ist dabei das Verfahren anzuwenden, wenn das Synchronisierungsmodul derart einstellbar ist, dass die Abgabe der voreinstellbaren Abfolge von den akustischen Warngeräten abgegebenen akustischen Signale der Windenergieanlagen zeitgleich erfolgt oder alternativ so aufeinander abgestimmt ist, dass die Signale sich zeitlich nicht überschneiden. Durch eine derartige Synchronisation zeitgleich oder abwechselnd wird der Effekt der Zusammengehörigkeit verstärkt, da der Bezug der Signale zueinander offensichtlich ist.

Weiter ist vorgesehen, dass die meteorologischen Verhältnisse auf die Lautstärke der von dem akustischen Warngerät abgegebenen Signale Einfluss nehmen. Bevorzugt wirkt die Sichtweitenmesseinrichtung auf das Lautstärkemodul derart ein, dass die Lautstärke umso größer ist je geringer die gemessene Sichtweite ist. In einer alternativen Ausführungsform ist vorgesehen, dass der Offshore-Windpark mindestens eine Windbestimmungseinrichtung zum Erfassen der Windrichtung und Windstärke umfasst, insbesondere als Bestandteil mindestens einer Windenergieanlage, und die Windbestimmungseinrichtung auf das Lautstärkemodul von mindestens einem akustischen Warngerät einwirkt. Bevorzugt wirkt sie so ein, dass das Signal um so lauter abgegeben wird, je stärker der Wind aus einer Windrichtung weht, aus der am wahrscheinlichsten Schiffe auf den Offshore-Windpark zugefahren kommen. Dadurch wird eine Abschwächung des Signals in diese Richtung mindestens kompensiert. In einer Weiterentwicklung wird die Lautstärke des Signals sogar noch über die reine Windkompensation hinaus weiter angehoben, da eine solche Wetterlage ein besonders hohes Risiko für Schiffe bedeutet in den Offshore-Windpark hineingetrieben zu werden.

Gemäß einer bevorzugten Ausführungsform ist vorgesehen, dass der Offshore-Windpark mindestens ein Annäherungsmodul zum Erfassen der Entfernung und/oder der Bewegungsrichtung eines Schiffs umfasst, insbesondere als Bestandteil mindestens einer Windenergieanlage, und das Annäherungsmodul auf das Lautstärkemodul von mindestens einem akustischen Warngerät einwirkt. Der Windpark kann entweder selbst über ein automatisches Radarsystem oder einen AIS-Empfänger (Automatisches Schiffsidentifizierungssystem) verfügen, um Schiffspositionen zu erfassen und eine mögliche Gefährdung zu erkennen und die Gefahrensignale entsprechend zu aktivieren. Daher kann ein Richtungsdetektormodul vorgesehen sein, das den Abstand, Kurs und/oder Geschwindigkeit der in der Nähe des Offshore-Windparks befindlichen Schiffe bestimmt und die gleichzeitige oder zeitversetzte Abgabe und/oder Lautstärke der akustischen Signale je nach Abstand, wahrscheinlicher Anfahrtsrichtung und/oder Geschwindigkeit eines Schiffs und Abstände der akustischen Warngeräte zueinander bestimmt.

Alternativ kann der Offshore Windpark, einzelne Windenergieanlagen oder auch die Wartungszentrale die Daten des Automatischen Schiffsidentifizierungssystems (AIS) auswerten und entsprechend der Kollisionsgefahr die Kollisionsrichtung ermitteln und daraufhin die Lautstärke der in Richtung der Kollisionsgefährdung abgegebenen Signale erhöhen.

Gemäß einer vorteilhaften Ausgestaltung ist vorgesehen, dass der Offshore-Windpark mindestens ein Kompensationsmodul zum Erfassen des Ausfalls eines akustischen Warngeräts und/oder anderer Hinderniskennzeichnungen umfasst, insbesondere als Bestandteil mindestens einer Windenergieanlage, und dass das Kompensationsmodul nach Erfassen des Ausfalls eines akustischen Warngeräts und/oder einer anderen Hinderniskennzeichnung auf das Lautstärkemodul von mindestens einem akustischen Warngerät abgegebenen Signale einwirkt. Fällt ein akustisches Warngerät aus, so ist vorgesehen, dass die Lautstärke der nächstliegenden akustischen Warngeräte derart erhöht wird, dass der Ausfall kompensiert wird. Also beispielsweise die kompensierenden akustischen Warngeräte 2 Seemeilen vom aufgefallenen Warngerät zu hören sind.

Gemäß einer weiteren bevorzugten Ausführungsform ist vorgesehen, dass das Synchronisationsmodul ein Laufzeitenmodul und/oder das Lautstärkemodul ein Entfernungsmodul umfasst, mittels derer die Signalzeitpunkte und/oder Lautstärke der akustischen Warngeräte so eingestellt werden, dass das Signal auf einen vorbestimmbaren Punkt außerhalb des Offshore-Windparks zeitsynchron ist und/oder eine bestimmte Lautstärke erreicht wird. Offshore-Windparks sind häufig mehrere Kilometer lang, so dass die Synchronisation der Signale auf einen bestimmten Punkt oder eine bestimmte Richtung unter Berücksichtigung der Laufzeitunterschiede des akustischen Signals geschehen muss. Auch muss das am weitesten vom Punkt entfernte akustische Warngerät seine Lautstärke am stärksten erhöhen, um noch gut wahrnehmbar zu sein. Dabei kann der Punkt, auf den die Signalabgabe synchronisiert wird, variabel einstellbar oder sogar kontinuierlich beweglich sein.

Gemäß einer weiteren bevorzugten Ausführungsform ist vorgesehen, dass das Synchronisationsmodul ein Empfängermodul aufweist, mittels dessen das Synchronisationsmodul Funksignale empfängt, aus denen es die Zeitpunkte für die akustischen Signale ableitet. Die Synchronisation erfolgt dabei mittels der Steuerung der Windenergieanlage oder der Steuerung der akustischen Warngeräte durch eine Synchronisierung der Zeitmessung in den einzelnen Steuerungen. Aus der synchronisierten Zeitmessung leitet dann die Steuerung die Zeitpunkte der Signalabgabe ab. Die Synchronisation der Zeitmessung erfolgt dabei über Funksignale, wie beispielsweise der von Global Positioning Satelliten abgegebener GPS-Zeitsignale.

Gemäß einer weiteren bevorzugten Ausführungsform ist vorgesehen, dass sich die in den akustischen Warngeräten hinterlegten Signale voneinander unterscheiden. Dabei unterscheidet sich das Signal insbesondere nicht in der Lautabfolge sondern in der Tonhöhe um mindestens eine Terz.

Gemäß einer weiteren bevorzugten Ausführungsform ist vorgesehen, dass die akustischen Warngeräte ein Servicemodul umfassen, über das eine Datenübertragung durchgeführt wird und die Übertragung von Statusmeldungen und Daten ermöglicht wird. Das Servicemodul kann dabei als eine Datenschnittstelle ausgeführt sein, über die das Warngerät mit der Steuerung der Windenergieanlage, der Steuerung des Offshore-Windparks und/oder einer Wartungszentrale kommunizieren kann. Es ist dadurch möglich einerseits den Ausfall des Warngeräts schnell zu erfassen und eine Reparatur zu veranlassen und andererseits ggf. Änderungen an der Betriebssteuerung des Warngeräts durchzuführen, um beispielsweise das hinterlegte Signal zu ändern.

Die Erfindung bezieht sich ferner auf Verfahren zum Steuern mehrerer akustischer Warngeräte in einem Offshore-Windpark. Die Erfindung wird nachfolgend unter Bezugnahme auf die beigefügten Zeichnungen anhand einer vorteilhaften Ausführungsform beispielhaft beschrieben. Bezüglich aller im Text nicht näher erläuterten erfindungsgemäßen Einzelheiten wird ausdrücklich auf die Zeichnungen verwiesen. Es zeigen:
- Fig. 1: eine Windenergieanlage; und
- Fig. 2: einen Offshore-Windpark

Zunächst wird der Aufbau einer Windenergieanlage 1 für den Offshoreeinsatz erläutert, wie sie der Erfindung zugrunde liegt. Eine in ihrer Gesamtheit mit der Bezugsziffer 1 bezeichnete Windenergieanlage umfasst einen an einer Gondel 3 angebrachten drehbaren Rotor mit Rotorblättern 2, der durch den Wind in Drehung versetzt wird. Die Gondel 3 ist dazu schwenkbar auf einem Turm 14 angebracht. Die Drehbewegung des Rotors mit Rotorblättern 2 wird an einen in der Gondel 3 befindlichen elektrischen Generator (nicht gezeigt) übertragen, der die aus der Bewegung erzeugte elektrische Energie mittels elektrischer Leitungen an ein elektrisches Übertragungsnetz abgibt (nicht gezeigt), so dass die erzeugte elektrische Energie elektrischen Verbrauchern zugeführt werden kann. Die Offshore-Windenergieanlage 1 ist im offenen Meer errichtet und nicht vom Schiffsverkehr getrennt. Daher muss besonders viel Aufwand betrieben werden, um die Gefährdung des Schiffsverkehrs durch Kollision mit der Windenergieanlage 1 zu verringern. Dazu sind eine Reihe von Gefahrenzeichen 18 und Warngeräten (4,5,7,8) an der Windenergieanlage angebracht. Die Gefahrenzeichen und Warngeräte können folgende Mittel umfassen:
- Befeuerungen zum Hinweis für Luftfahrzeuge 8, die auf der Gondel 3 und je nach Höhe des Turms 14 auch am Turm 14 angebracht sein können,
- Befeuerungen für die Seeschifffahrt 5, die 6-30m über der mittleren Hochwasserwasserlinie beispielsweise am Turm 14 oder einer Plattform 19 angebracht sind,
- einen AIS UKW Sender und Empfänger 7 zur besseren Ortung durch größere Schiffe und von Schiffen,
- Radarreflektoren 20 für die bessere Reflektion von Radarortungssystemen und
- akustische Warngeräte 4, wie z. B. einem Nebelhorn zur Abgabe akustischer Signale bei schlechter Sicht.
- Zusätzlich sind noch Markierungen 18 in roter oder gelber Warnfarbe an der Windenergieanlage angebracht, insbesondere an dem Turm 14, dem Rotor mit Rotorblättern 2 und/oder der Gondel 3.

An der Windenergieanlage 1 ist zur Messung der Sichtweite ein Sichtweitenmessgerät 21 und der Helligkeit ein Lichtmesser 22 angebracht. Je nach Sichtweite und äußeren Lichtverhältnissen werden die einzelnen Warngeräte 4,5,7,8 aktiviert oder in ihrer Intensität geregelt. Bei schlechten Lichtverhältnissen wird beispielsweise die Beleuchtungsstärke der Befeuerungen 5, 8 erhöht. Unterschreitet die Sichtweite einen voreingestellten Grenzwert von z. B. 2 Seemeilen wird zusätzlich zu den Befeuerungen das akustische Warngerät 4 aktiviert, welches in regelmäßigen voreingestellten Abständen eine Signalfolge abgibt. Das Signal ist dabei in einem Signalmodul 25 hinterlegt und kann beispielsweise ein im Morsecode abgegebenes U sein (zwei kurze Töne gefolgt von einem langen Ton), das in einem Abstand von 30 Sekunden abgegeben wird.

Einige Sicherheitskomponenten 4, 5, 7, 8 sind untereinander und mit der Steuerung 6 der Windenergieanlage mittels eines Datennetzes 12 oder Feldbussystems, wie beispielsweise E-thernet, verbunden. Durch dieses Datennetz 12 übermitteln die Komponenten ihre jeweiligen Messwerte, Betriebszustände und erhalten Steuerbefehle. Das Datennetz 12 der Windenergieanlage 1 kann darüber hinaus noch eine externe Datenleitung 13 aufweisen, über die die Windenergieanlage 1 direkt oder indirekt mit anderen Windenergieanlagen im Offshore-Windpark 17, einer Windparksteuerung und/oder einer Wartungszentrale verbunden werden kann.

Die Steuerung 6 umfasst ein Synchronisierungsmodul 24, mit dem die Zeitpunkte, an denen die akustischen Signale der einzelnen akustischen Warngeräte abgegeben werden sollen, ermittelt werden, und dem akustischen Warngerät 4 übermittelt, das dann die im akustischen Warngerät hinterlegte Signalfolge und Wiederholgeschwindigkeit selbstständig weiterführt, bis eine Korrektur der Abgabezeitpunkte und/oder der Wiederholfrequenz von der Steuerung 6 vorgegeben wird oder das akustische Warngerät 4 wieder deaktiviert wird.

In einer nicht dargestellten Alternative kann das Synchronisierungsmodul 24 auch im akustischen Warngerät 4 selbst angeordnet sein.

Das Synchronisierungsmodul 24 ermittelt die Zeitpunkte mittels einer hinterlegten Funktion und der gemessenen Zeit, darüber hinaus ermittelt das Synchronisierungsmodul 24 auch eine Korrektur der Abgabezeitpunkte, wenn dieses durch externe Signale vorgegeben wird.

Die Zeit misst das Synchronisierungsmodul 24 dabei mittels eines Zeitsignal-Empfängers 9, über den ein Zeitsignal entweder über das Datennetz oder per Funksignal (z. B. eines GPS-Signals) empfangen wird.

Die Lautstärke der akustischen Warngeräte 4 wird von der Steuerung 6 der Windenergieanlage 1 beeinflusst. Dazu weist das akustische Warngerät 4 ein Lautstärkemodul 11 mit einem Signaleingang auf, über das die Lautstärke der Signalabgabe beeinflusst werden kann. Dabei ist die Lautstärke im akustischen Warngerät 4 auf ein Mindestmaß eingestellt. Dieses Mindestmaß kann beispielsweise eine Lautstärke sein, bei der man unter guten Bedingungen das akustische Warngerät noch in einer Entfernung von 2 nautischen Meilen hört (entspricht etwa 3704m).

Darüber hinaus ist ein Richtungsdetektormodul 26 vorgesehen, das anhand der Sensorwerte der Umgebungssensoren 7, 21, 22, 23 der Windenergieanlage bestimmt, in welche Richtung eine Lautstärkeerhöhung besonders sinnvoll ist und die Lautstärkeabgabe an den akustischen Warngeräten 4, deren Hauptabstrahlrichtung in dieser Richtung liegen, eine Lautstärkeerhöhung vornimmt.

Die Steuerung 6 der Windenergieanlage 1 kann die Lautstärke des akustischen Warngeräts 4 über den Signaleingang des Lautstärkemoduls 11, je nach Situation, erhöhen oder wieder bis auf das Mindestmaß absenken. Die Lautstärke wird immer dann erhöht, wenn die Gefahr einer Schiffskollision erhöht ist. Beispiele dafür sind:
- Die Lautstärke wird stufenweise erhöht, um so geringer die gemessene Sichtweite ist.
- Die Lautstärke der akustischen Warngeräte 4 wird umgekehrt proportional zur gemessenen Windstärke erhöht, wenn eine Windrichtung entgegen der Hauptabstrahlrichtung der jeweiligen akustischen Warngeräte vorliegt.
- Die Lautstärke wird erhöht, wenn über den AIS-Empfänger 7 ein Schiff 27 detektiert wird, das eine vorgebbare Entfernung zum Offshore-Windparks 17 unterschreitet.
- Zusätzlich kann die Lautstärke auch dann noch erhöht werden, wenn eines von mehreren akustischen Warngeräten 4 im Offshore-Windpark 17 ausfällt. Die Lautstärkeerhöhung erfolgt derart, dass das Signal des ausgefallenen akustischen Warngeräts 4 kompensiert wird, also die Reichweite des Signals beispielsweise 2 nautische Meilen zuzüglich der Entfernung der akustischen Warngeräte 4 zueinander beträgt.

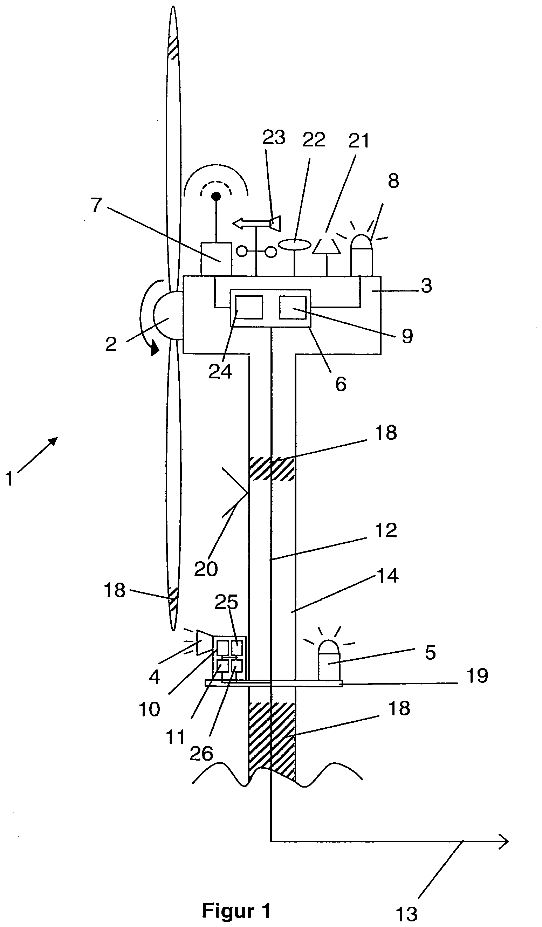

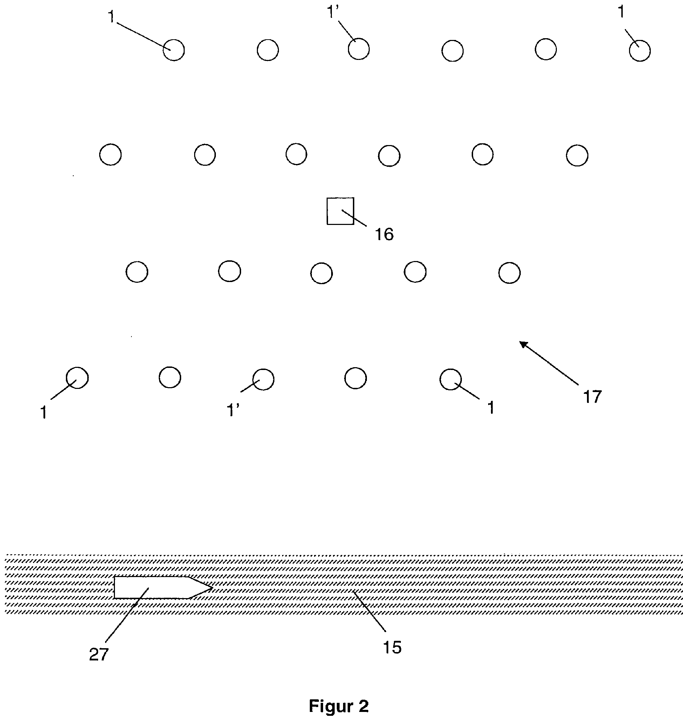

Die Synchronisierung der akustischen Warngeräte wird anhand der Figur 2 anschaulich verdeutlicht. Figur 2 zeigt schematisch einen Offshore-Windpark 17 mit mehreren durch Kreise symbolisch dargestellten Windenergieanlagen. Einige Windenergieanlagen 1, 1' sind mit den in Figur 1 dargestellten Gefahrenzeichen 18 und Warngeräten 4, 5, 7, 8 ausgestattet. Insbesondere sind diese Windenergieanlagen 1, 1' jeweils mit mindestens einem akustischen Warngerät 4 ausgestattet, um bei schlechten Sichtverhältnissen den Schiffsverkehr 27 vor einem Hindernis zu warnen. Im Offshore-Windpark befindet sich darüber hinaus noch eine zentrale Plattform 16, auf der sich verschiedene Serviceeinrichtungen befinden, wie z. B. der Anschluss an die Leistungsübertragung auf das Festland, die Notstromversorgung und insbesondere die Windparksteuerung, die den einzelnen Windenergieanlagen übergeordnete Regelvorgänge koordiniert.

In der Nähe des Offshore-Windparks 17 führt eine Schifffahrtsstraße 15 vorbei, auf der der überwiegende Schiffsverkehr 27 in der Umgebung des Offshore-Windparks 17 passiert.

Detektiert das Sichtweitenmessgerät einer Windenergieanlage 1, 1' eine Sichtweite unterhalb des Sichtweitengrenzwerts, aktiviert diese Windenergieanlage 1, 1' ihr akustisches Warngerät und meldet die Aktivierung an die Windparksteuerung, die dieses ggf. nach dem Durchführen einer Plausibilitätsprüfung der gemessenen Sichtweiten an den anderen Windenergieanlagen 1, 1' den anderen Windenergieanlagen 1, 1' weitermeldet. Daraufhin werden alle akustischen Warngeräte 4 im Offshore-Windpark 17 aktiviert und geben synchronisiert die akustischen Signale ab.

Im einfachsten Fall erfolgt die Signalabgabe zeitgleich durch die akustischen Warngeräte 4. Wesentlich aufwendiger ist die Abgabe der Signale derart, dass sie sich nicht überschneiden, also als diskrete Signalfolge wahrnehmbar sind. Hierzu werden die aktuellen Abgabezeitpunkte der einzelnen akustischen Warngeräte 4 der einzelnen Windenergieanlagen 1 über die externe Datenleitung 13 im Offshore-Windpark 17 an eine zentrale Windparksteuerung 16 übermittelt. Diese bestimmt die optimale Signalfolge und überträgt korrigierte Abgabezeitpunkte an die einzelnen Windenergieanlagen zurück. Alternativ kann die Funktion der zentralen Windparksteuerung 16 von einer einzelnen Windenergieanlage 1 übernommen werden.

Die Synchronisation erfolgt dabei derart, dass die Signale nacheinander abgegeben werden, so dass ein passierendes Schiff die Signale einzeln wahrnehmen kann und somit seine eigene Position relativ zum Offshore-Windpark 17 anhand der Reihenfolge und Lautstärke der gehörten Signale abschätzen kann.

Fällt ein akustisches Warngerät 4 aus, beispielsweise die akustischen Warngeräte 4 an den periphär-zentral gelegenen Windenergieanlagen 1', wird der Ausfall an die Windparksteuerung 16 gemeldet, die diesen Ausfall dann an die anderen periphär-seitlich liegenden Windenergieanlagen 1 mit noch funktionierenden akustischen Warngeräten 4 weitermeldet. Diese Windenergieanlagen 1 erhöhen die Lautstärke der akustischen Warngeräte daraufhin derart, dass der Ausfall kompensiert wird.

Detektiert eine Windenergieanlage 1, 1' mittels des AIS-Empfängers, dass ein Schiff 27 bei schlechter Sicht die Schifffahrtsstraße 15 verlassen hat und dem Offshore-Windpark 17 immer näher kommt, erhöht die Windenergieanlage 1, 1' die Lautstärke des akustischen Warngeräts 4. Die Windenergieanlage 1, 1' meldet diese Annäherung an die Windparksteuerung 16, die ihrerseits die Lautstärke des a-kustischen Warngeräts 4, das dem Schiff 27 am nächsten ist, erhöht.

Es kann auch die Lautstärke mehrerer akustischer Warngeräte 4 derart erhöht werden, dass an einem vorbestimmten Punkt außerhalb des Offshore-Windparks 17 eine besonders gute Wahrnehmbarkeit erreicht wird. Dies bedeutet beispielsweise, dass bei einer Annäherung an den in Figur 2 dargestellten Offshore-Windpark 17 von der linken oder rechten Seite insbesondere die Lautstärke der akustischen Warngeräte der an dieser Seite befindlichen Windenergieanlagen 1 erhöht wird.

## Patentansprüche

1. Offshore-Windpark (17) umfassend mindestens zwei Windenergieanlagen (1,1') zur Erzeugung von elektrischem Strom aus Wind, mindestens zwei akustischen Warngeräten (4) und eine Sichtweitenmesseinrichtung (21) zum Erfassen der Sichtweite
wobei
die Sichtweitenmesseinrichtung (21) ausgebildet ist, nach Erfassen einer Sichtweite unterhalb eines Sichtweitengrenzwerts ein Aktivierungssignal an die mindestens zwei akustischen Warngeräte (4) anzulegen,
**dadurch gekennzeichnet, dass**
mindestens ein Synchronisierungsmodul (9) vorgesehen ist, das die Zeitpunkte von mindestens einem der akustischen Warngeräte (4) abzugebenden akustischen Signale in Relation zu den akustischen Signalen des anderen oder mindestens eines der anderen akustischen Warngeräte (4) bestimmt und
die mindestens zwei akustische Warngeräte (4) jeweils ein Lautstärkemodul (11) umfassen mittels dessen die Lautstärke der akustischen Signale einstellbar ist, wobei der Offshore-Windpark (17) mindestens eine Windbestimmungseinrichtung (23) zum Erfassen der Windrichtung und Windstärke umfasst, und die Windbestimmungseinrichtung (23) auf das an das Lautstärkemodul angelegte Lautstärkesignal von mindestens einem akustischen Warngerät (4) einwirkt.

2. Offshore-Windpark nach Anspruch 1, **dadurch gekennzeichnet, dass** die mindestens zwei akustischen Warngeräte (4) jeweils ein Signalmodul (25) umfassen, in dem die Art, Reihenfolge und/oder Tonhöhe des akustischen Signals hinterlegt ist.

3. Offshore-Windpark nach einem der vorhergehenden Ansprüche, **dadurch gekennzeichnet, dass** bei der Sichtweitenmesseinrichtung (21) vorgesehen ist, dass ein Lautstärkesignal an das Lautstärkemodul (11) angelegt wird.

4. Offshore-Windpark nach einem der vorhergehenden Ansprüche, **dadurch gekennzeichnet, dass** die mindestens eine Windbestimmungseinrichtung (23) Bestandteil mindestens einer Windenergieanlage (1,1') ist.

5. Offshore-Windpark nach einem der vorhergehenden Ansprüche 1 bis 4, **dadurch gekennzeichnet, dass** der Offshore-Windpark (17) mindestens ein Annäherungsmodul (7) zum Erfassen der Entfernung und/oder der Bewegungsrichtung eines Schiffs (27) umfasst, insbesondere als Bestandteil mindestens einer Windenergieanlage (1,1'), und das Annäherungsmodul (7) auf das an das Lautstärkemodul angelegte Lautstärkesignal von mindestens einem akustischen Warngerät (4) einwirkt.

6. Offshore-Windpark nach einem der vorhergehenden Ansprüche, **dadurch gekennzeichnet, dass** das Synchronisationsmodul (24) ein Empfängermodul (9) aufweist, mittels dem das Synchronisationsmodul (24) Funksignale empfängt und aus denen es die Zeitpunkte für die akustischen Signale ableitet.

7. Offshore-Windpark nach einem der vorhergehenden Ansprüche, **dadurch gekennzeichnet, dass** die akustischen Warngeräte (4) ein Servicemodul umfassen, über das eine Datenübertragung durchgeführt wird und die Übertragung von Statusmeldungen und Daten ermöglicht wird.

8. Verfahren zum Steuern von mindestens zwei akustischen Warngeräten in einem Offshore-Windpark bestehend aus mindestens zwei Windenergieanlagen zur Erzeugung von elektrischem Strom aus Wind, **gekennzeichnet durch** die Schritte:
- Messen der Sichtweite in der Nähe mindestens einer Windenergieanlage;
- Aktivieren der akustischen Warngeräte bei Unterschreiten eines vorgegebenen Sichtweitengrenzwertes, wobei die Lautstärke der akustischen Warngeräte in Abhängigkeit von der Windrichtung und Windstärke eingestellt wird; und
- Synchronisieren der Signalabgabe der akustischen Warngeräte zueinander.

9. Verfahren zum Steuern mehrerer akustischer Warngeräte in einem Offshore-Windpark nach Anspruch 8, **dadurch gekennzeichnet, dass** die Signale der akustischen Warngeräte um so lauter abgegeben werden, je weiter der Sichtweitengrenzwert unterschritten wird.

10. Verfahren zum Steuern mehrerer akustischer Warngeräte in einem Offshore-Windpark nach einem der Ansprüche 8 bis 9, **dadurch gekennzeichnet, dass** die Position und/oder Bewegungsrichtung eines Schiffs in der Umgebung des Offshore Windparks erfasst wird und die Lautstärke des akustischen Warngeräts in Abhängigkeit der Position und/oder Bewegungsrichtung verändert wird.

11. Verfahren zum Steuern mehrerer akustischer Warngeräte in einem Offshore-Windpark nach einem der Ansprüche 8 bis 10, **dadurch gekennzeichnet, dass** die Lautstärke mindestens eines akustisches Warngeräts so eingestellt ist, dass eine vorbestimmte Lautstärke an einem vorbestimmten Punkt außerhalb des Offshore-Windparks erreicht wird.

12. Verfahren zum Steuern mehrerer akustischer Warngeräte in einem Offshore-Windpark nach einem der Ansprüche 8 bis 11, **dadurch gekennzeichnet, dass** Zeitpunkte zur Abgabe der Signale von den akustischen Warngeräten so aufeinander abgestimmt werden, dass die Signale unter Berücksichtigung der jeweiligen Laufzeit des akustischen Signals einen vorbestimmten Punkt außerhalb des Offshore Windparks zeitgleich erreichen.

13. Verfahren zum Steuern mehrerer akustischer Warngeräte in einem Offshore-Windpark nach einem der Ansprüche 8 bis 12, **dadurch gekennzeichnet, dass** die Betriebsbereitschaft der akustischen Warngeräte überwacht wird und bei Ausfall eines akustischen Warngeräts die Lautstärke mindestens eines anderen akustischen Warngeräts derart erhöht wird, dass der Ausfall zumindest teilweise kompensiert wird.

## Claims

1. Offshore wind farm (17) comprising at least two wind energy installations (1, 1') for generating electrical power from wind, at least two acoustic warning devices (4) and a visibility measuring device (21) for detecting visibility,
where
the visibility measuring device (21) is designed, after detection of a visibility below a visibility limit value, to apply an activation signal to the at least two acoustic warning devices (4),
**characterized in that**
at least one synchronization module (9) is provided which determines the points in time of the acoustic signals to be emitted by at least one of the acoustic warning devices (4) in relation to the acoustic signals of the other or at least one of the other acoustic warning devices (4), and the at least two acoustic warning devices (4) each comprise a volume module (11), by means of which the volume of the acoustic signals can be set, where the offshore wind farm (17) comprises at least one wind determining device (23) for detecting the wind direction and wind strength, and the wind determining device (23) acts on the volume signal applied to the volume module of at least one acoustic warning device (4).

2. Offshore wind farm according to Claim 1, **characterized in that** the at least two acoustic warning devices (4) each comprise a signal module (25), in which the type, order and/or pitch of the acoustic signal is stored.

3. Offshore wind farm according to either of the preceding claims, **characterized in that**, in the case of the visibility measuring device (21), it is provided that a volume signal is applied to the volume module (11).

4. Offshore wind farm according to any of the preceding claims, **characterized in that** the at least one wind determining device (23) is part of at least one wind energy installation (1, 1').

5. Offshore wind farm according to any of the preceding Claims 1 to 4, **characterized in that** the offshore wind farm (17) comprises at least one proximity module (7) for detecting the distance and/or the direction of movement of a ship (27), in particular as part of at least one wind energy installation (1, 1'), and the proximity module (7) acts on the volume signal - applied to the volume module - of at least one acoustic warning device (4).

6. Offshore wind farm according to any of the preceding claims, **characterized in that** the synchronization module (24) has a receiver module (9), by means of which the synchronization module (24) receives radio signals and from the latter it derives the points in time for the acoustic signals.

7. Offshore wind farm according to any of the preceding claims, **characterized in that** the acoustic warning devices (4) comprise a service module, by means of which a data transmission is carried out and the transmission of status messages and data is made possible.

8. Method for controlling at least two acoustic warning devices in an offshore wind farm comprising at least two wind energy installations for generating electrical power from wind, **characterized by** the steps of:
- measuring the visibility in the vicinity of at least one wind energy installation;
- activating the acoustic warning devices in the event of a predetermined visibility limit value being undershot, where the volume of the acoustic warning devices is set in a manner dependent on the wind direction and wind strength; and
- synchronizing the signal emission of the acoustic warning devices with respect to one another.

9. Method for controlling a plurality of acoustic warning devices in an offshore wind farm according to Claim 8, **characterized in that** the signals of the acoustic warning devices are emitted all the more loudly, the further the visibility limit value is undershot.

10. Method for controlling a plurality of acoustic warning devices in an offshore wind farm according to either of Claims 8 and 9, **characterized in that** the position and/or direction of movement of a ship in the vicinity of the offshore wind farm is detected and the volume of the acoustic warning device is altered in a manner dependent on the position and/or direction of movement.

11. Method for controlling a plurality of acoustic warning devices in an offshore wind farm according to any of Claims 8 to 10, **characterized in that** the volume of at least one acoustic warning device is set in such a way that a predetermined volume is attained at a predetermined point outside the offshore wind farm.

12. Method for controlling a plurality of acoustic warning devices in an offshore wind farm according to any of Claims 8 to 11, **characterized in that** points in time for emitting the signals from the acoustic warning devices are coordinated with one another in such a way that the signals, taking account of the respective propagation time of the acoustic signal, reach a predetermined point outside the offshore wind farm simultaneously.

13. Method for controlling a plurality of acoustic warning devices in an offshore wind farm according to any of Claims 8 to 12, **characterized in that** the operational readiness of the acoustic warning devices is monitored and, in the event of failure of an acoustic warning device, the volume of at least one other acoustic warning device is increased in such a way that the failure is at least partly compensated for.

## Revendications

1. Parc éolien (1) offshore, comprenant au moins deux éoliennes (1, 1') pour la production de courant électrique à partir du vent, au moins deux appareils avertisseurs (4) acoustiques et un système de mesure de distance de visibilité (21) pour la détection de la distance de visibilité,
le système de mesure de distance de visibilité (21) étant constitué pour, après la détection d'une distance de visibilité inférieure à une valeur limite de distance de visibilité, appliquer un signal d'activation aux au moins deux appareils avertisseurs (4) acoustiques,
**caractérisé en ce**
**qu'**il est prévu au moins un module de synchronisation (9) qui définit les moments de signaux acoustiques à délivrer à au moins un des appareils avertisseurs (4) acoustiques en relation avec les signaux acoustiques de l'autre ou d'au moins un des autres appareils avertisseurs (4) acoustiques et
les au moins deux appareils avertisseurs (4) acoustiques comprennent respectivement un module de volume sonore (11) au moyen duquel le volume sonore des signaux acoustiques peut être réglé, le parc éolien offshore (17) comprenant au moins un système d'analyse du vent (23) pour la détection de la direction du vent et de la force du vent, et le système de définition du vent (23) agit sur le signal de volume sonore, appliqué au module de volume sonore, d'au moins un appareil avertisseur (4) acoustique.

2. Parc éolien offshore selon la revendication 1, **caractérisé en ce que** les au moins deux appareils avertisseurs (4) acoustiques comprennent respectivement un module de signalisation (25) dans lequel le type, l'ordre de succession et/ou la hauteur du son du signal acoustique sont enregistrés.

3. Parc éolien offshore selon l'une des revendications précédentes, **caractérisé en ce que**, pour le système de mesure de distance de visibilité (21), il est prévu qu'un signal de volume sonore soit appliqué au module de volume sonore (11).

4. Parc éolien offshore selon l'une des revendications précédentes, **caractérisé en ce que** le système d'analyse du vent (23) au moins au nombre de un est un élément constitutif d'au moins une éolienne (1, 1').

5. Parc éolien offshore selon l'une des revendications précédentes 1 à 4, **caractérisé en ce que** le parc éolien offshore (17) comprend au moins un module d'approche (7) destiné à détecter l'éloignement et/ou la direction de déplacement d'un navire (27), en particulier en tant qu'élément constitutif d'au moins une éolienne (1, 1'), et le module d'approche (7) agit sur le signal de volume sonore, appliqué au module de volume sonore, d'au moins un appareil avertisseur (4) acoustique.

6. Parc éolien offshore selon l'une des revendications précédentes, **caractérisé en ce que** le module de synchronisation (24) présente un module de réception (9) au moyen duquel le module de synchronisation (24) reçoit des signaux radio et en dérive les moments pour les signaux acoustiques.

7. Parc éolien offshore selon l'une des revendications précédentes, **caractérisé en ce que** les appareils avertisseurs (4) acoustiques comprennent un module de service par le biais duquel une transmission de données est effectuée et la transmission de messages de statut et de données est rendue possible.

8. Procédé de commande d'au moins deux appareils avertisseurs acoustiques dans un parc éolien offshore composé d'au moins deux éoliennes pour la production de courant électrique à partir du vent, **caractérisé par** les étapes suivantes:
- mesure de la distance de visibilité à proximité d'au moins une éolienne;
- activation des appareils avertisseurs acoustiques en cas de passage sous une valeur limite prédéfinie de distance de visibilité, le volume sonore des appareils avertisseurs acoustiques étant réglé en fonction de la direction vent et de la force du vent; et
- synchronisation de la délivrance de signaux des appareils avertisseurs acoustiques les uns par rapport aux autres.

9. Procédé de commande de plusieurs appareils avertisseurs acoustiques dans un parc éolien offshore selon la revendication 8, **caractérisé en ce que** les signaux des appareils avertisseurs acoustiques sont délivrés avec un volume d'autant plus élevé que le passage sous la valeur limite de distance de visibilité est important.

10. Procédé de commande de plusieurs appareils avertisseurs acoustiques dans un parc éolien offshore selon l'une des revendications 8 à 9, **caractérisé en ce que** la position et/ou la direction de déplacement d'un navire dans l'environnement du parc éolien offshore est détectée, et le volume sonore de l'appareil avertisseur acoustique est modifié en fonction de la position et/ou de la direction de déplacement.

11. Procédé de commande de plusieurs appareils avertisseurs acoustiques dans un parc éolien offshore selon l'une des revendications 8 à 10, **caractérisé en ce que** le volume sonore d'au moins un appareil avertisseur acoustique est réglé de telle sorte qu'un volume sonore prédéfini est atteint à un point prédéfini à l'extérieur du parc éolien offshore.

12. Procédé de commande de plusieurs appareils avertisseurs acoustiques dans un parc éolien offshore selon l'une des revendications 8 à 11, **caractérisé en ce que** des instants pour la délivrance des signaux par les appareils avertisseurs acoustiques sont harmonisés les uns avec les autres de telle sorte que les signaux, en prenant en compte le temps de parcours respectif du signal acoustique, atteignent simultanément un point prédéfini à l'extérieur du parc éolien offshore.

13. Procédé de commande de plusieurs appareils avertisseurs acoustiques dans un parc éolien offshore selon l'une des revendications 8 à 12, **caractérisé en ce que** la disponibilité opérationnelle des appareils avertisseurs acoustiques est surveillée et, en cas de défaillance d'un appareil avertisseur acoustique, le volume sonore d'au moins un autre appareil avertisseur acoustique est augmenté de telle sorte que la défaillance est compensée au moins partiellement.
